# EUROPEAN PATENT APPLICATION

(11) **EP 4 614 427 A1**
(43) Date of publication of application: **10.09.2025**
(21) Application number: 23885858.3
(22) Date of filing: 02.11.2023
(51) Int. Cl.: G06Q 50/10, G06Q 30/0207

(54) **NFT-ISSUING SYSTEM, NFT ISSUANCE METHOD, AND PROGRAM**

(30) Priority: 02.11.2022 JP 2022176568
(71) Applicant: G. U. Group, Inc., Tokyo 150-8512 (JP)
(72) Inventor: KONDO, Hidekazu, Tokyo 150-8512 (JP)
(74) Representative: Hoffmann Eitle
(86) International application number: PCT/JP2023/039642
(87) International publication number: WO 2024/096104

(57) **Abstract**

A system for granting tokens related to a place or area to users who are actually visiting or have visited the place or area is provided. The system includes: an acquisition unit that acquires, via an information coordination device that acquires first location information indicating the location of a user terminal of a user who wishes to obtain an NFT, the first location information; a determination unit that determines that the NFT can be granted to the user if the location of the user terminal indicated by the first location information is within a predetermined range; and an NFT granting unit that grants the NFT to the user's wallet address on a blockchain when the determination unit determines that the NFT can be granted.

## Description

### Technical Field

The present invention relates to an NFT issuance system, an NFT issuance method, and a program.

### Background Art

Systems that issue a token as a history or proof of a user's visit to an event or facility have been disclosed (e.g., Patent Literature 1).

### Citation List

### Patent Literature

Patent Literature 1: WO 2021/245863

### Summary of Invention

### Technical Problem

The system described in Patent Literature 1 issues a token that proves a visit to a facility or participation in an event in response to a user's operation on a terminal such as a smartphone. The token that is issued is associated with the event or the like, and may include information about an incentive (e.g., discount coupons for merchandise).

This system issues a token to a user who actually visited a place where an event is held, or a user who participated in the event in some way without visiting the place. For example, this system can issue a token to a user who visited a venue where a baseball game was played, as well as to a user who watched the game in a public viewing, for example, instead of the on-site venue. Namely, this system grants tokens containing coupons based on whether users actually visited a venue or not, using the location information acquired from the users' terminals.

While this system is configured to grant tokens based on location information, it cannot determine whether or not the users actually went to the event site. Therefore, there is a need for a system that allows users who actually visited an event or facility to be granted tokens related to the place or area where the event or facility is located.

Accordingly, it is an object of the present invention to provide a system for granting tokens related to a place or area to users who are actually visiting or have visited the place or area.

### Solution to Problem

An NFT issuance system according to an embodiment of the present invention includes: an acquisition unit configured to acquire, via an information coordination device configured to acquire first location information indicating a location of a user terminal of a user who wishes to obtain an NFT, the first location information; a determination unit configured to determine that the NFT can be granted to the user if the location of the user terminal indicated by the first location information is within a predetermined range; and an NFT granting unit configured to grant the NFT to a wallet address of the user on a blockchain when the determination unit determines that the NFT can be granted.

An NFT issuance method according to an embodiment of the present invention includes the steps of: acquiring, by a computer, via an information coordination device configured to acquire first location information indicating a location of a user terminal of a user who wishes to obtain an NFT, the first location information; determining that the NFT can be granted to the user if the location of the user terminal indicated by the first location information is within a predetermined range; and granting the NFT to a wallet address of the user on a blockchain when the determination unit determines that the NFT can be granted.

A program according to an embodiment of the present invention causes a computer to: acquire, via an information coordination device configured to acquire first location information indicating a location of a user terminal of a user who wishes to obtain an NFT, the first location information; determine that the NFT can be granted to the user if the location of the user terminal indicated by the first location information is within a predetermined range; and grant the NFT to a wallet address of the user on a blockchain when the determination unit determines that the NFT can be granted.

### Advantageous Effects of Invention

According to the present invention, a system for granting tokens related to a place or area to users who are actually visiting or have visited the place or area can be provided.

### Brief Description of Drawings

[Figure 1] Figure 1 is a diagram illustrating a configuration example of an NFT issuance system.
[Figure 2] Figure 2 is a diagram illustrating an example of functional configurations of various units contained in the NFT issuance system.
[Figure 3] Figure 3 is a diagram illustrating a user information database D121.
[Figure 4] Figure 4 is a diagram illustrating an NFT database D122.
[Figure 5] Figure 5 is a diagram illustrating a flow of the processing steps in an NFT issuance system 10.
[Figure 6] Figure 6 is a diagram illustrating a flow of the processing steps in an NFT issuance system 20.
[Figure 7] Figure 7 is a diagram illustrating an example of a hardware configuration of a computer.

### Description of Embodiments

### ===NFT Issuance System 10 according to First Embodiment===

### <<System Overview>>

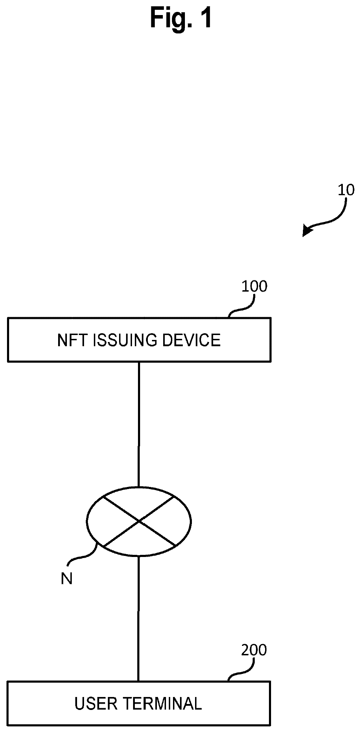

An NFT issuance system 10 according to a first embodiment is outlined with reference to Figure 1. Figure 1 is a diagram illustrating a configuration example of the NFT issuance system 10 according to the first embodiment.

The NFT issuance system 10 is a system that grants an NFT (Non Fungible Token) associated with a predetermined place or area (hereinafter referred to as "target area") to a user who visited the target area. The NFT issuance system 10 issues an NFT when it determines that a user who wishes to obtain an NFT is visiting a target area based on the user's location indicated by the user terminal. Namely, the NFT issuance system 10 uses location information to issue an NFT associated with a target area to the user who actually visited the target area.

An NFT refers to a non-replaceable token that is issued on a blockchain. The NFT may be, for example, a token that contains target digital content, metadata of the target digital content, and index data about the metadata.

A blockchain is a system used for transactions of crypto currencies and various tokens (such as security tokens and non fungible tokens). A blockchain consists of multiple nodes (computers) for the decentralized management of ledger data. The blockchain mechanism manages the decentralized ledger in a way that is difficult to tamper with. The blockchain mechanism for decentralized ledger management adopted here is well known and will not be described in detail.

Digital content includes, for example, photos, movies, art, games, and music.

Metadata is information associated with digital content and includes the name, description, and a URL (Uniform Resource Locator) that indicates where the digital content is saved.

Index data is information associated with the metadata and includes a token ID for identifying the token, the owner's wallet address, and a URI (Uniform Resource Identifier) that indicates where the metadata is saved.

Some or all of the metadata and index data information is stored on a blockchain. More specifically, the index data may be stored on a blockchain, or both the metadata and the index data may be stored on a blockchain.

For example, an **NFT** contains tamper-resistant index data that is stored on a blockchain and associated with digital content. This makes the digital content non-replaceable. The index data keeps the record of the wallet address of the **NFT** owner, so that the **NFT** can certify the ownership of the digital content.

The digital content associated with the metadata and the index data may be stored in a database outside of the blockchain, or may be stored on the blockchain together with the metadata and the index data.

The NFT issued in the NFT issuance system 10 shall be understood as being made up of index data stored on a blockchain, and metadata and digital content associated with this index data, stored outside of the blockchain, as one example. Namely, a user who is granted an NFT can obtain the digital content contained in the NFT.

In the NFT issuance system 10, an NFT may contain information that indicates the location or range of a target area. Namely, the metadata or index data of an NFT may contain information that indicates the location or range of a target area.

Here, the process of granting an NFT to a user in the NFT issuance system 10 is, for example, a process of executing a contract to transfer an NFT issued on a blockchain to the user's wallet address (hereinafter referred to as "grant contract"). For example, if it is determined, based on the location information of the user terminal 200, that the user terminal 200 is in a predetermined location, the NFT issuance system 10 executes the grant contract.

### <<Configuration Overview>>

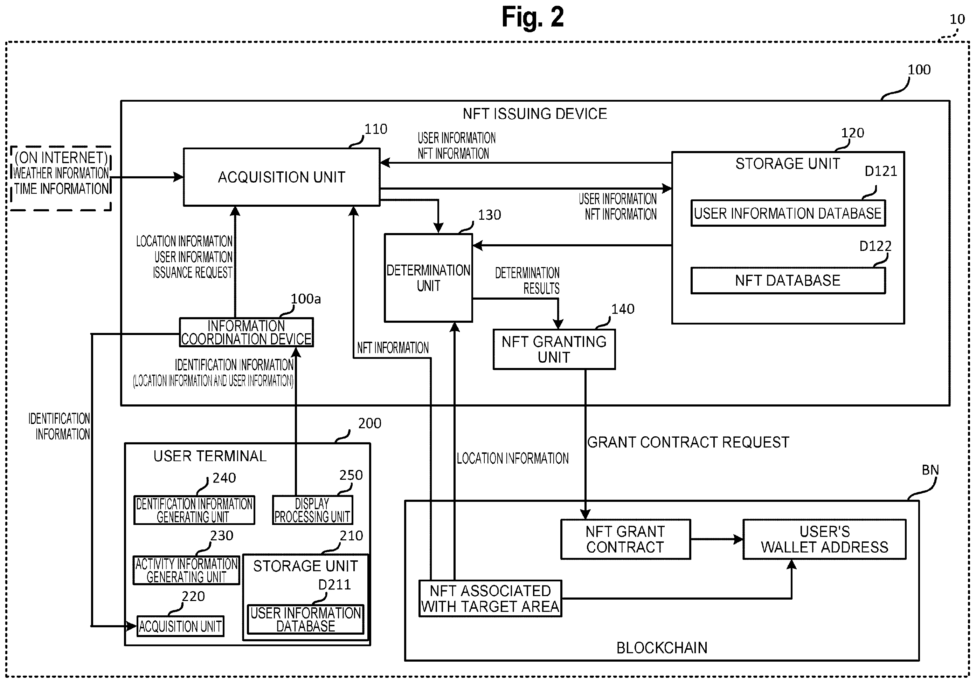

The configuration of the NFT issuance system 10 is outlined with reference to Figure 1 and Figure 2. As shown in Figure 1, the NFT issuance system 10 includes an NFT issuing device 100 and a user terminal 200.

Various devices making up the NFT issuance system 10 are interconnected via a communication network N in a communicable manner. The communication network N is either a wired network or a wireless network. Although not shown, the NFT issuance system 10 may include a plurality of user terminals 200.

The NFT issuing device 100 is a device that grants an NFT associated with a target area to a user who wishes to obtain the NFT, based on the user's location information. As shown in Figure 2, the NFT issuing device 100 acquires location information that indicates the current location of the user terminal 200 from an information coordination device 100a, for example.

The information coordination device 100a is a device that is able to obtain identification information, and installed in a target area visited by the user, for example. The information coordination device 100a acquires the identification information from the user terminal 200 via wired or wireless communication.

The identification information includes, for example, a 2D code (e.g., QR code (registered trademark)) or a 1D code (e.g., bar code) displayed on a display unit of the user terminal 200, and information output from the user terminal 200 via wireless communication (e.g., contactless communication such as BLE (Bluetooth Low Energy) or ultrasound).

The identification information includes the location information of the user terminal 200. The location information may be any information that allows for identification of the current location of the user terminal 200, which is, for example, information indicative of a longitude and a latitude, information indicating a range of a facility, information indicating a range included in a preset area, or information indicating a postal code.

The location information may be information obtained by a GPS (Global Positioning System) in the user terminal 200, for example, or information obtained using a beacon, or information stored in a storage unit 210 of the user terminal 200.

The information coordination device 100a acquires the identification information output from the user terminal 200, for example, and sends it to the NFT issuing device 100.

The identification information may contain personal information such as the user's name and age, and the wallet address (hereinafter referred to as "user information"). The user information may be information that is stored in the storage unit 210 of the user terminal 200. This allows the NFT issuing device 100 to grant NFTs to users with a simple system configuration, since there is no need to store user information in a database.

For example, the NFT issuing device 100 executes a grant contract on a blockchain BN if the current location of the user terminal 200 is within a predetermined range.

The predetermined range refers to a range that indicates a locality, for example, which may be a range within a 30 m radius centered on the location of the information coordination device 100a, a range indicating a city, town, or village, or a range indicating an interior of a specific facility.

The NFT issuing device 100 may be, for example, a cloud computer, a server computer, a personal computer (e.g., a desktop, laptop, or tablet), a media computing platform (e.g., a cable, satellite set-top box, digital video recorder), a handheld computer device (e.g., a PDA, electronic mail client), or any other type of computing or communications platform. At least some of the processing in the NFT issuing device 100 may be implemented by one or more computers (e.g., cloud computing consisting of one or more computers), or not.

The user terminal 200 is a terminal for receiving an operation input from a user to be granted an NFT, for example. Upon receiving an operation input from a user, for example, the user terminal 200 displays identification information (e.g., 2D code) including location information on a display unit.

The user terminal 200 may be, for example, a smartphone, a mobile phone (feature phone), a personal computer (e.g., a desktop, laptop, or tablet), a media computing platform (e.g., a cable, satellite set-top box, digital video recorder), a handheld computer device (e.g., a PDA (Personal Digital Assistant), electronic mail client), a wearable terminal (e.g., an eyewear device, watch device), or any other type of computing or communications platform.

### <<Processing Overview>>

Next, the processing in the NFT issuance system 10 is outlined.

First, upon receiving an operation input from a user, for example, the user terminal 200 displays identification information (e.g., 2D code) including the location information of the user terminal 200 on a display unit. The identification information may include a request to have the NFT issuing device 100 grant an NFT to the user (hereinafter referred to as "issuance request").

Next, the NFT issuing device 100 (information coordination device 100a) reads the identification information displayed on the display unit of the user terminal 200.

The NFT issuing device 100 determines whether the current location of the user terminal 200 is within a predetermined range (e.g., within a range of a radius of 30 m around the location of the information coordination device 100a), based on the location information and the issuance request included in the identification information.

If the current location of the user terminal 200 is within the predetermined range, the NFT issuing device 100 executes a grant contract to grant an NFT to the user's wallet address on a blockchain BN.

As described above, the NFT issuance system 10 grants an NFT to a user if the current location of the user terminal 200 possessed by the user is within a preset range. Namely, a user who is not actually visiting a target area (e.g., an event or a tourist attraction) is not granted an NFT.

Thus the NFT issuance system 10 can provide a mechanism that grants NFTs to users who have actually visited a target place or facility, incentivizing the users to go to the place or facility.

### ===NFT Issuing Device 100===

The configuration of the NFT issuing device 100 is described with reference to Figure 2. Figure 2 is a diagram illustrating an example of functional configurations of various units contained in the NFT issuance system 10.

As shown in Figure 2, the NFT issuing device 100 includes functional units such as, for example, an acquisition unit 110, a storage unit 120, a determination unit 130, and an NFT granting unit 140.

The acquisition unit 110 acquires various pieces of information from other devices.

More specifically, the acquisition unit 110 acquires location information that indicates the current location of the user terminal 200 (hereinafter referred to as "first location information") via an information coordination device 100a installed in the target area visited by the user, for example. In addition to the first location information, the acquisition unit may also acquire the user information and an issuance request included in the identification information.

The information coordination device 100a may acquire various pieces of information from the 2D code or 1D code displayed on the display unit of the user terminal 200, or from the identification information wirelessly output from the user terminal 200. Alternatively, for example, the information coordination device may acquire various pieces of information from the user terminal 200 via wireless communication with an access point installed in the target area.

The acquisition unit 110 may also acquire location information that indicates the current location of the information coordination device 100a (hereinafter referred to as "second location information"). The acquisition unit 110 may acquire the second location information from the information coordination device 100a, or from the storage unit 120 that stores the second location information.

The acquisition unit 110 may also acquire the second location information that is included in an NFT. In this case, the NFT includes the second location information that indicates a predetermined location (e.g., the location of the information coordination device 100a) in the index data or the metadata.

The acquisition unit 110 may acquire a user's wallet address via the information coordination device 100a reading the identification information (e.g., 2D code) displayed on the display unit of the user terminal 200. In this case, the identification information includes the user's wallet address.

Alternatively, the acquisition unit 110 may acquire a user's wallet address from a user information database D121 stored in the storage unit 120, or may acquire a user's wallet address from a blockchain BN based on the information that allows identification of the user.

The acquisition unit 110 may also acquire weather information through the internet. Weather information includes, for example, information that indicates the time (hereinafter referred to as "time information"), and information that shows a weather condition (hereinafter referred to as "weather information").

The storage unit 120 may include, for example, a user information database D121 and an NFT database D122.

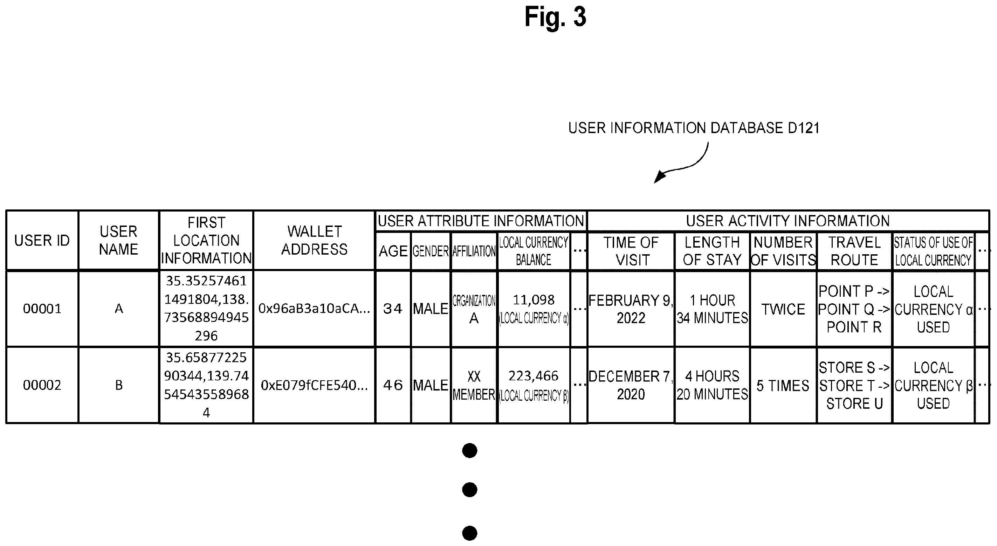

The user information database D121 is described with reference to Figure 3. Figure 3 is a diagram illustrating the user information database D121.

The user information database D121 may be created by storing various pieces of information acquired from the user terminal 200 via the information coordination device 100a, or may be created by a user storing (entering) data in the storage unit 120 in advance via the user terminal 200.

As shown in Figure 3, the user information database D121 includes, for example, entries such as [User ID], [User Name], [First Location Information], [Wallet Address], [User Attribute Information], and [User Activity Information]. The information included in each entry is the information that can be included in the "user information."

[User ID] is an entry in which ID codes that allow unique identification of users, for example, are stored.

[User Name] is an entry in which information indicating users' names, for example, is stored.

[First Location Information] is an entry in which the first location information obtained from the user terminal 200 is stored.

[Wallet Address] is an entry in which users' wallet addresses are stored.

[User Attribute Information] is an entry in which various pieces of information indicating users' attributes, for example, are stored. The information that indicates attributes may include, for example, the age and gender of the users. Other information that indicates attributes may include the affiliation, occupation, family structure, annual income, asset status, address, hometown, and educational background of the users.

The information stored in the [Wallet Address] and [User Attribute Information] may be the information the NFT issuing device 100 acquired from the information coordination device 100a that read the identification information displayed on the display unit of the user terminal 200. Namely, in this case, the identification information includes the information stored in the entries [Wallet Address] and [User Attribute Information].

[User Activity Information] is an entry in which information indicating the user activity history, for example, is stored. The activity history information of a user may include, for example, the time of visit, the length of stay, the date and time of visit, the number of visits, travel routes, and information indicating a status of use of local currency.

The information indicating the time of visit (hereinafter referred to as "visit time information") is, for example, the information indicating the date and time when the information coordination device 100a installed in the target area read the identification information displayed on the display unit of the user terminal 200. The information indicating the time of the visit may be obtained by calculation, either by the NFT issuing device 100 or by the user terminal 200. In the case where the user terminal 200 calculates the time of the visit, the information coordination device 100a reads the identification information that includes the visit time information displayed on the display unit of the user terminal 200. The NFT issuing device 100 then acquires the time information via the information coordination device 100a.

The information indicating the length of stay (hereinafter referred to as "length of stay information") is, for example, the information indicating the elapsed time from the time when the first location information was determined to be within a predetermined range up to the present time, which is calculated based on the user's history of location information. The length of stay information may be obtained by calculation, either by the NFT issuing device 100 or by the user terminal 200. In the case where the user terminal 200 calculates the length of the stay, the user terminal 200 displays the identification information that includes the length of stay information on the display unit. This allows the NFT issuing device 100 to acquire the length of stay information via the information coordination device 100a.

The information indicating the number of visits (hereinafter referred to as "number of visits information") is, for example, the information indicating the number of times when the first location information was determined to be within a predetermined range, which is determined based on the user's history of location information. The number of visits information may be information that indicates the number of times when identification information has been obtained from the user terminal 200 via the information coordination device 100a. The number of visits may be determined by the NFT issuing device 100 or by the user terminal 200. In the case where the user terminal 200 determines the number of visits, the NFT issuing device 100 causes the user terminal 200 to display the identification information that includes the number of visits information on the display unit.

The information indicating travel routes (hereinafter referred to as "travel route information") is, for example, the information indicating a route taken until the user has reached a predetermined range, which is determined based on the user's history of location information. The travel route information may be, for example, information that indicates the location of the user terminal 200 at a certain interval. The travel route may be determined by the NFT issuing device 100 or by the user terminal 200. In the case where the user terminal 200 determines the travel route, the NFT issuing device 100 causes the user terminal 200 to display the identification information that includes the travel route information on the display unit.

The information indicating the status of use of local currency (hereinafter referred to as "usage status information") is, for example, the information indicating the history of past use of local currency by the user in the area that includes a predetermined range. The local currency usage status information is, for example, information obtained from a device that issues the local currency (not shown). The NFT issuing device 100 may obtain information about the user's local currency balance, information about the number of times the local currency has been used, and information about the amount spent, via communication with the device that issues the local currency.

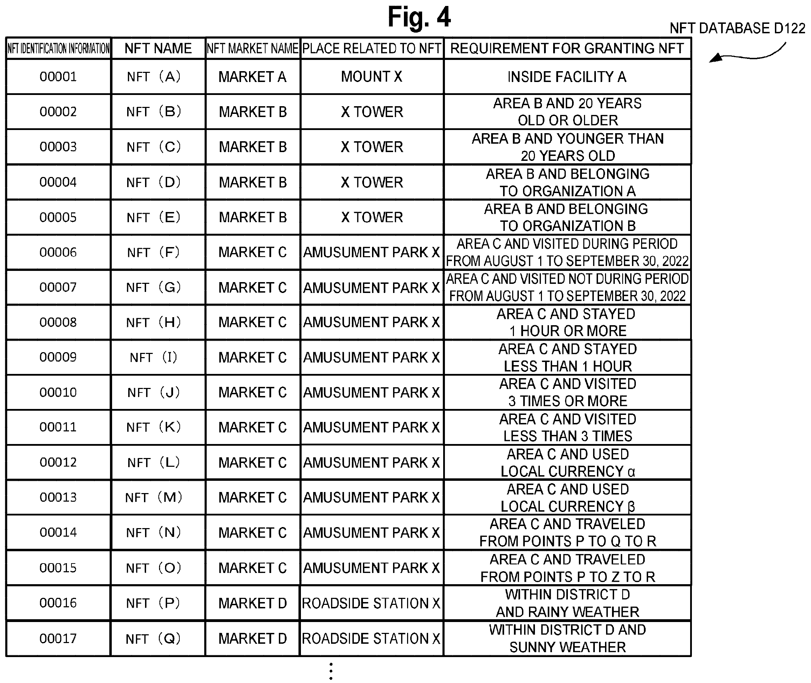

The NFT database D122 is described with reference to Figure 4. Figure 4 is a diagram illustrating the NFT database D122.

The NFT database D122 is a database that stores information about the NFTs issued by the NFT issuing device 100.

As shown in Figure 4, the NFT database D122 includes, for example, entries such as [NFT Identification Information], [NFT Name], [NFT Market Name], [Name of Place Related to NFT], and [Requirement for Granting NFT].

[NFT Identification Information] is an entry in which identification codes that allow unique identification of NFTs are stored.

[NFT Name] is an entry in which information indicating the names of the NFTs is stored.

[NFT Market Name] is an entry in which information indicating the names of the platforms where the NFTs are traded, for example, is stored.

[Name of Place Related to NFT] is an entry in which information indicating the names of places, for example, such as an area, facility, or a tourist attraction is stored.

[Requirement for Granting NFT] is an entry in which requirements for granting an NFT to a user are stored, for example. The requirements for granting NFTs are the information used in the process in the determination unit 130 to be described later.

The determination unit 130 looks up the user information database D121 and the NFT database D122 and determines that an NFT can be granted to a user's wallet address if the user meets the requirements for granting the NFT.

For example, if the location of the user terminal 200 indicated by the location information is within a predetermined range, the determination unit 130 may determine that an NFT can be granted to the user's wallet address on a blockchain.

More specifically, for example, when the predetermined range set in the NFT database D122 is an interior of Facility A, the determination unit 130 determines that an NFT can be granted to the user's wallet address if the location indicated by the location information of the user terminal 200 (information included in the identification information) is within a location indicating the interior of Facility A.

Thus, the NFT issuing device 100 can incentivize the users who have visited a target area, promoting visits to the target area. Moreover, for example, it is possible to exclude users who attempt to obtain an NFT through fraudulent acts, such as having the identification information on the user terminal 200 read by the information coordination device 100a from a remote location (e.g., via a video call).

Alternatively, for example, if the location of the user terminal 200 indicated by the first location information, and the location of the information coordination device 100a indicated by the second location information are within a predetermined range, the determination unit 130 may determine that an NFT can be granted to the user's wallet address on the blockchain.

More specifically, for example, when the predetermined range set in the NFT database D122 is an interior of Facility A, the determination unit 130 determines that an NFT can be granted to the user's wallet address if the location indicated by the location information of the user terminal 200 (information included in the identification information) and the location of the information coordination device 100a are within a location indicating the interior of Facility A.

By incorporating the location of the information coordination device 100a alongside the location of the user terminal 200 as the requirements for granting an NFT, the NFT issuance system 10 can eliminate fraudulent acts such as falsifying the location information of the user terminal 200, for example, to have its identification information read by the information coordination device 100a from a remote location. The system can also prevent the identification information from being fraudulently read by the information coordination device 100a that has been transferred elsewhere in an unauthorized manner. Thus, the risk of fraudulent granting of NFTs associated with the target area to users can be mitigated.

Alternatively, for example, the determination unit 130 may determine, based on information that is included in the NFT and indicates a predetermined range, that an NFT can be granted to the user's wallet address on the blockchain, if the location of the user terminal 200 is within the predetermined range indicated by the NFT.

More specifically, for example, in the case where the NFT specifies an interior of Facility A as the predetermined range, the determination unit 130 determines that an NFT(A) can be granted to the user's wallet address if the location of the user terminal 200 is within Facility A.

Since the NFT issuance system 10 uses the tamper-resistant location information included in the NFT to determine whether to issue the NFT, it can prevent fraudulent acquisition of the NFT through falsified location information.

Alternatively, for example, the determination unit 130 may determine that an NFT can be granted to a user's wallet address if the location of the user terminal 200 indicated by the first location information is within the predetermined range and a user's attribution (such as age and affiliation) indicated by the user's attribute information included in the user information database D121 meets a predetermined requirement.

More specifically, for example, when the predetermined range set in the NFT database D122 is Area B and the predetermined requirement is that the user must be 20 years old or older, the determination unit 130 determines that an NFT can be granted to the user's wallet address if: the location indicated by the location information of the user terminal 200 (information included in the identification information) falls within Area B; and the user corresponding to the user terminal 200 is 20 years old or older.

More specifically, for example, when the predetermined range set in the NFT database D122 is Area B and the predetermined requirement for user affiliation (e.g., whether the user belongs to a certain organization or local government or holds membership in a certain service) is that the user must "belong to Organization A," the determination unit 130 determines that an NFT can be granted to the user's wallet address if: the location indicated by the location information of the user terminal 200 (information included in the identification information) falls within Area B; and the affiliation of the user corresponding to the user terminal 200 is "Organization A."

By incorporating the user attribute information (including age and affiliation) alongside the location information as the requirements for granting an NFT, the rarity of the NFT granted by the NFT issuance system 10 can be increased.

Alternatively, for example, if the location of the user terminal 200 indicated by the first location information is within the predetermined range, the determination unit 130 may determine that different NFTs can be granted to different cases, i.e., when the user's attribute indicated by the attribute information included in the user information database D121 meets a first predetermined requirement, and when the user's attribute meets a second predetermined requirement. Namely, the determination unit 130 may determine that a first NFT can be granted to the user's wallet address if the first predetermined requirement is met, and may determine that a second NFT can be granted to the user's wallet address if the second predetermined requirement is met.

More specifically, for example, when the predetermined range set in the NFT database D122 is Area B and the predetermined requirement is that the user must be "20 years old or older," the determination unit 130 determines that an NFT(B) can be granted to the user's wallet address if: the location indicated by the location information of the user terminal 200 (information included in the identification information) falls within Area B; and the user corresponding to the user terminal 200 is 20 years old or older. The determination unit determines that an NFT(C) can be granted to the user's wallet address if the user is 18 years old.

More specifically, for example, when the predetermined range set in the NFT database D122 is Area B and the predetermined requirement for user affiliation is that the user "belongs to Organization A," the determination unit 130 determines that an NFT(D) can be granted to the user's wallet address if: the location indicated by the location information of the user terminal 200 (information included in the identification information) falls within Area B; and the affiliation of the user corresponding to the user terminal 200 is "Organization A." The determination unit determines that an NFT(E) can be granted to the user's wallet address if the user's affiliation is "Organization B."

Thus, the NFT issuance system 10 can offer NFTs to the users who have actually visited the target area according to the user's attributes. For example, when age is the predetermined requirement, users can be incentivized to visit the target area after some months or years. When affiliation is the predetermined requirement, users can be incentivized to take some actions such as joining an organization or service.

Alternatively, for example, the determination unit 130 may determine that an NFT can be granted to a user's wallet address if: the location indicated by the first location information is within a predetermined range; and at least one of the time of visit indicated by the visit time information, the length of stay indicated by the length of stay information, the number of visits indicated by the number of visits information, the travel route indicated by the travel route information, and the status of use up to the present time of the local currency indicated by the local currency usage status information, included in the user information database D121, meets a predetermined requirement.

More specifically, for example, when the predetermined range set in the NFT database D122 is Area C and the predetermined requirement is that the user must visit during the period "from 00:00 on August 1, 2022 to 23:59 on September 30, 2022," the determination unit 130 determines that an NFT can be granted to the user's wallet address if: the location indicated by the location information of the user terminal 200 (information included in the identification information) falls within Area C; and the time of the visit by the user corresponding to the user terminal 200 meets the predetermined requirement.

More specifically, for example, when the predetermined range set in the NFT database D122 is Area C and the predetermined requirement is at least one of the following: a period of stay of "1 hour or more;" a number of visits of "three times or more;" the travel route of "Point P to Point Q to Point R;" and the local currency usage status indicating that "local currency α has been used," the determination unit 130 determines that an NFT can be granted to the user's wallet address if: the location indicated by the location information of the user terminal 200 (information included in the identification information) falls within Area C; and at least one of the time of visit, the length of stay, the number of visits, the travel route, and the status of use of local currency by the user corresponding to the user terminal 200 meets the predetermined requirement.

By setting requirements related to users' activities, the NFT issuance system 10 can encourage the users who have actually visited the target area to take some actions in the target area.

Alternatively, for example, if the location indicated by the first location information is within the predetermined range, the determination unit 130 may determine that different NFTs can be granted to different cases, i.e., when the time of visit indicated by the visit time information included in the user information database D121 meets a first predetermined requirement, and when the time of visit meets a second predetermined requirement. Namely, the determination unit 130 may determine that a first NFT is to be granted to the user's wallet address if the first predetermined requirement is met, and may determine that a second NFT is to be granted to the user's wallet address if the second predetermined requirement is met.

More specifically, for example, when the predetermined range set in the NFT database D122 is Area C and the predetermined requirement is that the user must visit during the period "from 00:00 on August 1, 2022 to 23:59 on September 30, 2022," the determination unit 130 determines that an NFT(F) can be granted to the user's wallet address if: the location indicated by the location information of the user terminal 200 (information included in the identification information) falls within Area C; and the time of the visit by the user corresponding to the user terminal 200 is 17:45 on August 20, 2022. On the other hand, the determination unit 130 determines that an NFT(G) can be granted if: the location of the user terminal 200 falls within Area C; and the time of the visit by the user is 12:00 on October 14, 2022.

Alternatively, for example, if the location indicated by the first location information is within the predetermined range, the determination unit 130 may determine that different NFTs can be granted to different cases, i.e., when at least one of the length of stay indicated by the length of stay information, the number of visits indicated by the number of visits information, the travel route indicated by the travel route information, and the usage status of the local currency indicated by the usage status information, included in the user information database D121, meets a first predetermined requirement, and when one of these meets a second predetermined requirement. Namely, the determination unit 130 may determine that a first NFT is to be granted to the user's wallet address if the first predetermined requirement is met, and may determine that a second NFT is to be granted to the user's wallet address if the second predetermined requirement is met.

More specifically, for example, when the predetermined range set in the NFT database D122 is Area C and the predetermined requirement is a "period of stay of 1 hour or more," the determination unit 130 determines that an NFT(H) can be granted to the user's wallet address if: the location indicated by the location information of the user terminal 200 (information included in the identification information) falls within Area C; and the time elapsed in which the location according to the first location information is within the predetermined range until the identification information of the user terminal 200 is read by the information coordination device 100a is 1 hour or more. On the other hand, the determination unit 130 may determine that an NFT(I) can be granted if: the location of the user terminal 200 falls within Area C; and the time elapsed in which the location according to the first location information is within the predetermined range until the identification information is read is 40 minutes.

More specifically, for example, when the predetermined range set in the NFT database D122 is Area C and the predetermined requirement is a "number of visits of 3 or more," the determination unit 130 determines that an NFT(J) can be granted to the user's wallet address if: the location indicated by the location information of the user terminal 200 (information included in the identification information) falls within Area C; and the number of times when the identification information of the user terminal 200 has been read by the information coordination device 100a is 3 or more. On the other hand, the determination unit 130 may determine that an NFT(K) can be granted if: the location of the user terminal 200 falls within Area C; and the identification information has been read once.

More specifically, for example, when the predetermined range set in the NFT database D122 is Area C and the predetermined requirement is that "a local currency α has been used," the determination unit 130 determines that an NFT(L) can be granted to the wallet address of the user corresponding to the user terminal 200 if: the location indicated by the location information of the user terminal 200 (information included in the identification information) falls within Area C; and if there is a record in the user information database D121 of the user corresponding to the user terminal 200 having used the local currency α. On the other hand, the determination unit 130 may determine that an NFT(M) can be granted if: the location of the user terminal 200 falls within Area C; and the user has used a local currency β.

More specifically, for example, when the predetermined range set in the NFT database D122 is Area C and the predetermined requirement is a "travel route of Point P to Point Q to Point R," the determination unit 130 determines that an NFT(N) can be granted to the user's wallet address if: the location indicated by the location information of the user terminal 200 (information included in the identification information) falls within Area C; and the user information database D121 indicates that the user terminal 200 has traveled from "Point P to Point Q to Point R" at the time when the identification information of the user terminal 200 is read by the information coordination device 100a. On the other hand, the determination unit 130 may determine that an NFT(O) can be granted if: the location of the user terminal 200 falls within Area C; and it is determined that the user terminal has traveled from "Point P to Point Z to Point R."

Thus, the NFT issuance system 10 can give the users who have actually visited the target area an incentive, which is that some type of NFT will be granted according to the user's activity history. This can further encourage the users to take some actions in the target area.

Alternatively, for example, the determination unit 130 may determine that an NFT can be granted to a user's wallet address if the location indicated by the first location information is within a predetermined range and the current weather indicated by weather information obtained from a database that stores weather information (not shown) meets a predetermined requirement.

More specifically, for example, when the predetermined range set in the NFT database D122 is District D and the predetermined requirement is a "rainy weather," the determination unit 130 determines that an NFT can be granted to the user's wallet address if: the location indicated by the location information of the user terminal 200 (information included in the identification information) falls within District D; and the weather is rainy when the identification information of the user terminal 200 is read by the information coordination device 100a.

By incorporating weather information alongside the location information as the requirements for granting NFTs, the NFT issuance system 10 can improve the stability of visitor numbers in the target area regardless of the weather.

Alternatively, for example, the determination unit 130 may determine that a first NFT can be granted to a user's wallet address if the location indicated by the first location information is within a predetermined range and the current weather indicated by the weather information obtained from a database that stores information relating to weather (not shown) meets a first predetermined requirement, and may determine that a second NFT can be granted to the user's wallet address if the current weather indicated by the weather information meets a second predetermined requirement.

More specifically, for example, when the predetermined range set in the NFT database D122 is District D and the predetermined requirement is a "rainy weather," the determination unit 130 determines that an NFT(P) can be granted to the user's wallet address if: the location indicated by the location information of the user terminal 200 (information included in the identification information) falls within District D; and the current weather is rainy. On the other hand, the determination unit 130 determines that an NFT(Q) can be granted to the user's wallet address if: the location of the user terminal 200 falls within Area A; and the current weather is sunny.

Thus, the NFT issuance system 10 can offer an NFT according to the current weather to the users who have actually visited the target area, allowing the users to enjoy the incentive that some type of NFT will be granted. This can encourage more people to visit the target area.

The NFT issuance system 10 may determine whether time information that indicates a time meets a predetermined requirement instead of the weather information described above. In this case, the determination unit 130 may determine that an NFT can be granted to a user's wallet address if the time when the identification information of the user terminal 200 is read by the information coordination device 100a is "before noon," for example. Moreover, the determination unit 130 may determine that a different NFT can be granted if the time is "after noon," for example.

By incorporating time information alongside the location information as the requirements for granting NFTs, the NFT issuance system 10 can improve the stability of visitor numbers in the target area regardless of the time.

As described above, the NFT issuing device 100 can issue different NFTs associated with a target area according to various conditions. Namely, the NFT issuance system 10 can give various incentives to each of the users who are visiting the same place, such as a prospect of an NFT, or different types of NFTs, according to the user's activity history or weather. This can attract the users who wish to collect NFTs to the target area, for example, and can inspire them to take some actions in the area.

The NFT granting unit 140 grants an NFT to a user's wallet address on a blockchain when the determination unit 130 determines that an NFT can be granted.

More specifically, the NFT granting unit 140 executes a grant contract to transfer an NFT associated with an issuer's wallet address to the user's wallet address on the blockchain.

### ===User Information Terminal 200===

The functional configuration of the user terminal 200 is described with reference to Figure 2. As shown in Figure 2, the user terminal 200 includes, for example, a storage unit 210, an acquisition unit 220, an activity information generating unit 230, an identification information generating unit 240, and a display processing unit 250.

The storage unit 210 includes a user information database D211, for example. The user information database D211 is similar to the user information database D121 shown in Figure 3 and therefore will not be described again.

The acquisition unit 220 acquires various pieces of information from other devices. For example, the acquisition unit 220 may obtain user information through a user input operation. Alternatively, for example, the acquisition unit 220 may obtain user information stored in the storage unit 210.

The activity information generating unit 230 generates, for example, various pieces of information included in the entry [User Activity Information] in the user information database D211 (e.g., information indicating the time of visit, the length of stay, the number of visits, the travel route, and the usage status of local currency). The activity information generating unit 230 stores the various pieces of information in the storage unit 210.

The identification information generating unit 240 generates identification information, for example. The identification information generating unit 240 may look up the user information database D211, for example, to generate identification information including the user's location information and the user information (here, the wallet address and the information indicating the user's age or activity history).

The display processing unit 250 displays the identification information on the display unit, for example. The identification information displayed on the display unit is, for example, a 2D code (QR code (registered trademark)) or a 1D code (bar code).

In the case where the user terminal 200 is not configured to display the identification information on the display unit, the user terminal may include a transmission unit that transmits the identification information to the NFT issuing device 100 or the information coordination device 100a via wireless communication such as beacon or ultrasound.

### ===Modification Examples===

### <<First Modification Example>>

Next, an NFT issuance system 10 according to a first modification example is described. The following describes only the differences from the NFT issuance system 10 described above. Unless otherwise specified, the configurations shall be considered the same as those of the NFT issuance system 10.

For example, the NFT issuance system 10 may set an expiration date on the identification information (here, an identifiable code such as a 2D code or a 1D code) displayed on the display unit of the user terminal 200.

More specifically, the user terminal 200 generates identification information that includes information indicating an expiration date. The user terminal 200 may update the identification information displayed on the display unit automatically when the expiration date expires.

The NFT issuing device 100 acquires the user's location information and the information indicating the expiration date via the information coordination device 100a.

If the location indicated by the user's location information is within a predetermined range and the time at which the identification information is read by the information coordination device 100a is before the expiration date, the determination unit 130 determines that an NFT can be granted to the user's wallet address on the blockchain.

On the other hand, if the time at which the identification information is read by the information coordination device 100a is after the expiration date, the determination unit 130 may send information indicating that no NFT can be granted to the user's wallet address on the blockchain to the user terminal 200 via the information coordination device 100a.

Alternatively, the NFT issuance system 10 can set a valid number of times for the identification information, for example.

More specifically, the user terminal 200 generates identification information that includes information indicating a valid number of times. The user terminal 200 may update the identification information displayed on the display unit automatically when the identification information has been used the valid number of times.

The NFT issuing device 100 acquires the user's location information and the information indicating the valid number of times via the information coordination device 100a.

If the location indicated by the user's location information is within a predetermined range and the number of times the identification information has been read by the information coordination device 100a so far does not exceed the valid number, the determination unit 130 determines that an NFT can be granted to the user's wallet address on the blockchain.

On the other hand, if the number of times the identification information has been read by the information coordination device 100a has reached the valid number, the determination unit 130 may send information indicating that no NFT can be granted to the user's wallet address on the blockchain to the user terminal 200 via the information coordination device 100a.

Alternatively, the NFT issuance system 10 can set an expiration date as well as a valid number of times for the identification information.

Namely, even if the user is within the predetermined range, the NFT issuance system 10 will not allow the NFT grant contract to be executed if, for example, the requirements of the expiration date and the valid number of times are not met.

The NFT issuance system 10 can thereby prevent fraudulent issuance of NFTs to users in the event that the identification information is compromised.

### <<Second Modification Example>>

Next, an NFT issuance system 10 according to a second modification example is described. The following describes only the differences from the NFT issuance system 10 described above. Unless otherwise specified, the configurations shall be considered the same as those of the NFT issuance system 10.

The NFT issuance system 10 according to the second modification example grants NFTs, for example, related to real estate ownership or digital content copyrights (hereinafter referred to as "profit-sharing NFT") to users' wallet addresses.

The NFT issuance system 10 provides users who own profit-sharing NFTs with a portion of the revenue generated from the real estate or copyrights associated with the profit-sharing NFTs. The NFT issuance system 10 shares a portion of the revenue by sending a crypto asset, for example, to the user's wallet address.

Real estate and digital content are associated with a target area, for example.

The crypto asset may be, for example, Ethereum or local currencies.

The determination unit 130 executes the same processing as described above, except that the NFTs to be granted are profit-sharing NFTs.

Thus, the NFT issuance system 10 can provide users who have visited a target area with the incentive that profits from the real estate or digital content associated with the target area can be obtained, thereby encouraging more users to visit the target area.

The NFT issuance system 10 may grant a profit-sharing NFT to a user's wallet address based on a user's operation selecting the option for obtaining the profit-sharing NFT. Namely, the NFT issuance system 10 may include a display processing unit (not shown) that displays a screen on the display unit for allowing the user to select either a profit-sharing NFT or the NFT associated with the target area described above to be granted.

Thus, the NFT issuance system 10 can encourage more users to visit the target area by increasing the options for the users.

### ===Processing Steps===

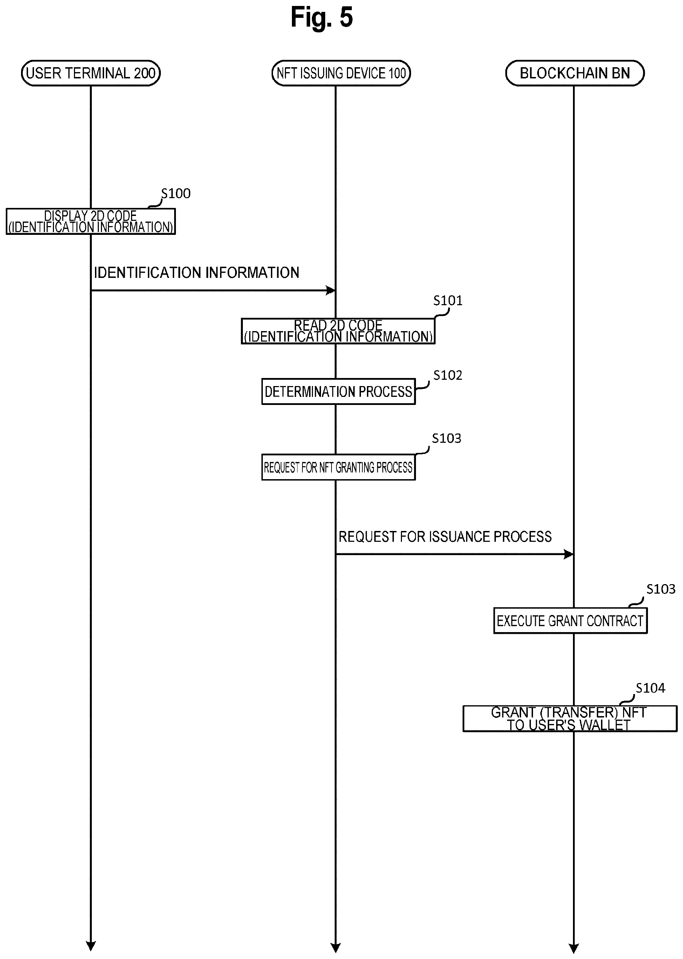

The processing steps of the NFT issuance system 10 are described with reference to Figure 5. Figure 5 is a flowchart of the process of granting an NFT to a user's wallet address in the NFT issuance system 10. In the following, the identification information displayed on the display unit will be described as a 2D code as an example.

At step S100, the user terminal 200 displays a 2D code (identification information) including user's location information on the display unit.

At step S101, the information coordination device 100a reads the 2D code displayed on the display unit of the user terminal 200. Here, the information coordination device 100a is installed within a certain range allowing NFTs to be issued.

The user terminal 200 may at the same time send its location information to the information coordination device 100a via wireless or wired communication.

At step S102, the NFT issuing device 100 executes a determination process in the determination unit 130. This process, performed by the NFT issuing device 100, determines that an NFT can be granted to a user's wallet address if the location indicated by the location information of the user terminal 200 included in the 2D code is within a predetermined range that constitutes the requirement for issuing the NFT.

Thus, the NFT issuance system 10 can provide the incentive that NFTs are granted to users who visit the target area, motivating people to visit the target area.

The NFT issuing device 100 may additionally acquire the location information of the information coordination device 100a. Namely, the NFT issuing device 100 determines that an NFT can be issued to a user's wallet address if the location indicated by the location information is within the predetermined range and the location of the NFT issuing device 100 is within the predetermined range.

This allows the NFT issuance system 10 to exclude users who attempt to fraudulently obtain an NFT by falsifying the location information of the user's own terminal.

The NFT issuing device 100 determines that an NFT can be granted to a user's wallet address if the location indicated by the location information is within the predetermined range and various pieces of information included in the user information meet predetermined requirements. The various pieces of information included in the user information are information about users' activities, including, for example, the time of visit information, the length of stay information, the number of visits information, the travel route information, and the usage status information. The predetermined requirements have been described in detail with respect to the determination unit 130 and will not be described again.

The NFT issuance system 10 can thus incentivize users according to their activities in the target area, contributing to revitalize the local area.

At step S103, when it is determined that an NFT can be granted to a user's wallet address, the NFT issuing device 100 executes a grant contract to issue an NFT to the user's wallet address on a blockchain.

At step S104, the grant contract is executed, and an NFT is transferred from the NFT issuer to the user's wallet address on the blockchain.

### ===NFT Issuance System 20 according to Second Embodiment===

Next, an NFT issuance system 20 according to a second embodiment will be described. The following describes only the differences from the NFT issuance system 10 described above. Unless otherwise specified, the configurations shall be considered the same as those of the NFT issuance system 10.

The NFT issuance system 20 according to the second embodiment grants NFTs to users by having user terminals 200 read the identification information (e.g., 2D code) output from an information coordination device 100a installed in each target area. The identification information includes location information that indicates the current location of the information coordination device 100a.

Namely, unlike the NFT issuance system 10, the NFT issuance system 20 grants NFTs to users by using the location information of the information coordination device 100a that it outputs.

Below, the processing in the NFT issuance system 20 is outlined.

The information coordination device 100a outputs identification information that includes the location information of the information coordination device 100a, for example. The information coordination device 100a may display the identification information on a display unit, or may output the identification information via wireless communication. In the following, identification information means identification information displayed on the display unit (e.g., a 2D code) as one example.

The user terminal 200 reads the identification information displayed on the display unit of the information coordination device 100a.

The NFT issuing device 100 obtains the location information of the information coordination device 100a from the user terminal 200. The NFT issuing device 100 may obtain the location information of the information coordination device 100a from the user terminal 200 via the information coordination device 100a.

The NFT issuing device 100 determines whether the location indicated by the location information of the information coordination device 100a is within a predetermined range (e.g., a range indicating an interior of a predetermined facility).

If the current location of the information coordination device 100a is within the predetermined range, the NFT issuing device 100 executes a grant contract to grant an NFT to the user's wallet address on a blockchain BN.

As described above, the NFT issuance system 20 grants an NFT to the user if the user terminal 200 is located in the location where the information coordination device 100a is installed. Namely, a user who is not actually visiting a target area (e.g., an event or a tourist attraction) is not granted an NFT.

Since NFTs are granted when information is read from an information coordination device 100a installed in a target area, NFTs associated with the target area can be issued with a simpler configuration.

### <<NFT Issuing Device 100>>

Next, the NFT issuing device 100 in the NFT issuance system 20 is described.

The acquisition unit 110 obtains device location information via the user terminal 200, which acquires the location information indicating the location of the information coordination device 100a (hereinafter referred to as "device location information") that the information coordination device 100a outputs such as to be obtainable within a certain range.

The device location information may be information obtained by a GPS (Global Positioning System) in the information coordination device 100a, or information obtained using a beacon, or information stored in the storage unit 120 of the NFT issuing device 100.

More specifically, the acquisition unit 110 may obtain the device location information included in the identification information that is output from the information coordination device 100a, for example, from the user terminal 200. Alternatively, the acquisition unit 110 may obtain the device location information output from the user terminal 200, for example, via the information coordination device 100a.

Alternatively, the acquisition unit 110 may obtain the device location information and location information that indicates the current location of the user terminal 200 (hereinafter referred to as "user location information") via the user terminal 200.

The determination unit 130 may determine that an NFT can be granted to the user if the location of the information coordination device 100a indicated by the device location information is within a predetermined range.

More specifically, for example, when the predetermined range set in the NFT database D122 is an interior of Facility A, the determination unit 130 determines that an NFT can be granted to the user's wallet address if the location indicated by the device location information of the information coordination device 100a (information included in the identification information) is within a location indicating the interior of Facility A.

Thus, the NFT issuance system 20 can give users the incentive that NFTs are granted to users who visit a target area, promoting visits to the target area. Moreover, for example, the NFT issuance system 20 can prevent the identification information from being fraudulently read by the information coordination device 100a that has been transferred elsewhere in an unauthorized manner. Thus, the risk of fraudulent granting of NFTs associated with the target area to users can be mitigated.

The determination unit 130 may determine that an NFT can be granted to the user if the location of the information coordination device 100a indicated by the device location information and the location of the user terminal 200 indicated by the user location information are within a predetermined range.

More specifically, for example, when the predetermined range set in the NFT database D122 is an interior of Facility A, the determination unit 130 determines that an NFT can be granted to the user's wallet address if the location indicated by the device location information of the information coordination device 100a and the location indicated by the user location information of the user terminal 200 are within a location indicating the interior of Facility A.

This allows the NFT issuance system 20 to eliminate fraud, for example, where the identification information is read by the user terminal 200 from a remote location by unauthorized means.

### ===Processing Steps===

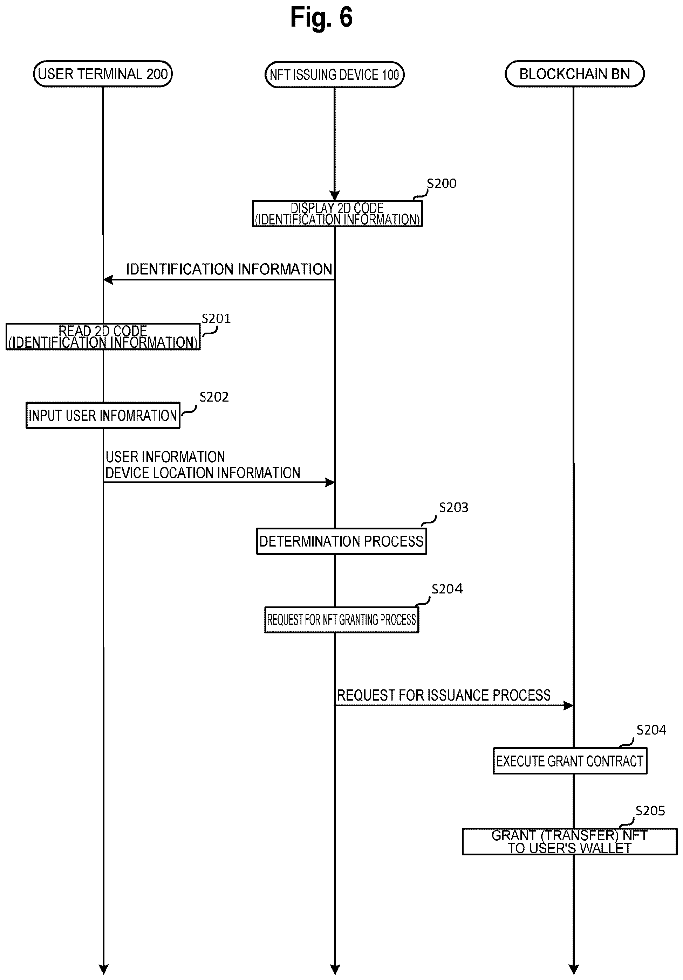

The processing steps of the NFT issuance system 20 are described with reference to Figure 6. Figure 6 is a flowchart of the process of granting an NFT to a user's wallet address in the NFT issuance system 20. In the following, the identification information displayed on the display unit will be described as a 2D code as an example.

At step S200, the information coordination device 100a displays a 2D code (identification information) including the device location information on the display unit.

At step S201, the user terminal 200 reads the 2D code displayed on the display unit of the information coordination device 100a.

Alternatively, the user terminal 200 may obtain the device location information from the information coordination device 100a via wireless or wired communication.

At step S202, the user terminal 200 may obtain user information by receiving operation inputs from the user on a screen displayed on the display unit for inputting the user information. The user information may include identification information that allows identification of the user, and the user's wallet address. The user terminal 200 transmits the user information and the device location information to the NFT issuing device 100. The user terminal 200 may transmit the user information and the device location information to the NFT issuing device 100 via the information coordination device 100a.

Alternatively, at step S202, the user terminal 200 may transmit the user information stored in the storage unit 210 automatically to the NFT issuing device 100 when the user terminal 200 has obtained identification information from the information coordination device 100a.

At step S203, the NFT issuing device 100 executes a determination process in the determination unit 130. This process, performed by the NFT issuing device 100, determines that an NFT can be granted to a user's wallet address if the location indicated by the device location information of the information coordination device 100a included in the 2D code is within a predetermined range that constitutes the requirement for issuing the NFT.

Thus, the NFT issuance system 10 can provide the incentive that NFTs are granted to users who visit the target area, motivating people to visit the target area.

The NFT issuing device 100 may additionally acquire the user location information of the user terminal 200. Namely, the NFT issuing device 100 may determine that an NFT can be granted to a user's wallet address if the location indicated by the device location information and the location indicated by the user location information are within the predetermined range.

This allows the NFT issuance system 20 to eliminate fraud, for example, where the identification information is read by the user terminal 200 from a remote location by unauthorized means.

At step S204, when it is determined that an NFT can be granted to a user's wallet address, the NFT issuing device 100 executes a grant contract to issue an NFT to the user's wallet address on a blockchain.

At step S205, the grant contract is executed, and an NFT is transferred from the NFT issuer to the user's wallet address on the blockchain.

### ===Hardware Configuration===

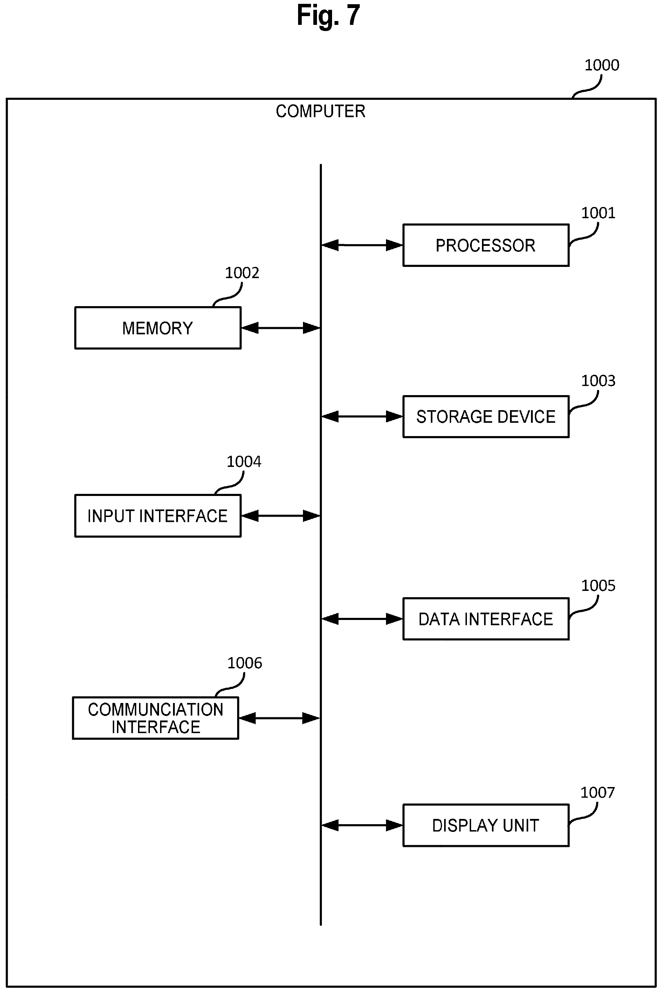

A hardware configuration example when the NFT issuing device 100 and the user terminal 200 are implemented by a computer 1000 is described with reference to Figure 7. Various functions of the NFT issuing device 100 and the user terminal 200 may be implemented by a plurality of separate devices.

Figure 7 is a diagram illustrating an example of a computer hardware configuration. As shown in Figure 7, the computer 1000 includes, for example, a processor 1001, a memory 1002, a storage device 1003, an input interface 1004, a data interface 1005, a communication interface 1006, and a display unit 1007.

The processor 1001 is a control unit that controls various processes in the computer 1000 by executing programs stored in the memory 1002.

The memory 1002 is a storage medium such as a RAM (Random Access Memory), for example. The memory 1002 temporarily stores the programs codes of the programs executed by the processor 1001, and the data necessary for executing the programs.

The storage device 1003 is a non-volatile storage medium such as a hard disk drive (HDD) or a flash memory, for example. The storage device 1003 stores an operating system and various programs for implementing the various configurations described above.

The input interface 1004 is a device for receiving input from users. Examples of the input interface 1004 include a keyboard, a mouse, a touchscreen, various sensors, wearable devices, and so on. The input interface 1004 may be connected to the computer 1000 via an interface such as a USB (Universal Serial Bus).

The data interface 1005 is a device for the input of data from an external source to the computer 1000. Examples of the data interface 1005 include drivers for reading data stored in various storage media. The data interface 1005 could be provided outside the computer 1000. In this case, the data interface 1005 is connected to the computer 1000 via an interface such as a USB.

The communication interface 1006 is a device for wired or wireless data communication via the internet N between the computer 1000 and an external device. The communication interface 1006 could be provided outside the computer 1000. In this case, the communication interface 1006 is connected to the computer 1000 via an interface such as a USB.

The display unit 1007 is a device for displaying various pieces of information. Examples of the display unit 1007 include, for example, a liquid crystal display, an organic EL (Electro-Luminescence) display, and the display of a wearable device. The display unit 1007 could be provided outside the computer 1000. In this case, the display unit 1007 is connected to the computer 1000 via a display cable or the like. In the case where a touchscreen is employed as the input interface 1004, the display unit 1007 can be integrated with the input interface 1004.

### ===Summary===

An NFT issuance system 10 according to the first embodiment includes: an acquisition unit 110 configured to acquire, via an information coordination device 100a configured to acquire first location information indicating a location of a user terminal 200 of a user who wishes to obtain an NFT, the first location information; a determination unit 130 configured to determine that the NFT can be granted to the user if the location of the user terminal 200 indicated by the first location information is within a predetermined range; and an NFT granting unit 140 configured to grant the NFT to a wallet address of the user on a blockchain BN when the determination unit 130 determines that the NFT can be granted. Thus, the NFT issuing device 100 can incentivize the users who have visited a target area, promoting visits to the target area. Moreover, for example, it is possible to exclude users who attempt to obtain an NFT through fraudulent acts, such as having the identification information on the user terminal 200 read by the information coordination device 100a from a remote location (e.g., via a video call).

Alternatively, the acquisition unit 110 of the NFT issuance system 10 acquires second location information that indicates a location of the information coordination device 100a, and the determination unit 130 determines that the NFT can be granted if the location indicated by the first location information and the location indicated by the second location information are within the predetermined range. By incorporating the location of the information coordination device 100a alongside the location of the user terminal 200 as requirements for granting an NFT, the NFT issuance system 10 can eliminate fraudulent acts such as falsifying the location information of the user terminal 200 to have its identification information read by the information coordination device 100a from a remote location. The system can also prevent the identification information from being fraudulently read by the information coordination device 100a that has been transferred elsewhere in an unauthorized manner. Thus, the risk of fraudulent granting of NFTs associated with the target area to users can be mitigated.

Alternatively, the determination unit 130 of the NFT issuance system 10 determines that the NFT can be granted if the location indicated by the first location information is within the predetermined range based on the NFT that includes range information indicating the predetermined range. Since the NFT issuance system 10 uses the tamper-resistant location information included in the NFT to determine whether to issue the NFT, it can prevent fraudulent acquisition of the NFT through falsified location information.

Alternatively, the information coordination device 100a may obtain the identification information that also includes the user's wallet address from the user terminal 200. The acquisition unit 110 of the NFT issuance system 10 acquires the first location information and the user's wallet address from the information coordination device 100a. The NFT granting unit 140 grants an NFT to the user's wallet address acquired by the acquisition unit 110 when the determination unit 130 determines that an NFT can be granted. This allows the NFT issuing device 100 to provide a system that grants NFTs to users with a simple system configuration, since there is no need to store information about the wallet address in the database to grant NFTs.

Alternatively, the acquisition unit 110 of the NFT issuance system 10 acquires attribute information that indicates a user's attribute. The determination unit 130 determines that an NFT can be granted to the user's wallet address if: the location indicated by the first location information is within the predetermined range; and the user's attribute indicated by the attribute information meets a predetermined requirement. By incorporating the user attribute information (including age and affiliation) alongside the location information as the requirements for granting an NFT, the rarity of the NFT granted by the NFT issuance system 10 can be increased.

Alternatively, the acquisition unit 110 of the NFT issuance system 10 acquires user information including age information that indicates a user's age. The determination unit 130 determines that an NFT can be granted to the user's wallet address if: the location indicated by the first location information is within the predetermined range; and the user's age indicated by the age information meets a predetermined requirement. By incorporating the user attribute information (including age and attribute) alongside the location information as the requirements for granting an NFT, the rarity of the NFT granted by the NFT issuance system 10 can be increased.

Alternatively, the acquisition unit 110 of the NFT issuance system 10 acquires user information including age information that indicates a user's age, and the determination unit 130 determines that a first NFT is to be granted to the user's wallet address if: the location indicated by the first location information is within the predetermined range; and the user's age indicated by the age information meets a predetermined requirement. The determination unit determines that a second NFT is to be granted to the user's wallet address if: the location indicated by the first location information is within the predetermined range; and the user's age indicated by the age information fails to meet the predetermined requirement. The NFT granting unit 140 grants the first NFT to the user's wallet address on the blockchain when the determination unit 130 determines that the first NFT is to be granted. The NFT granting unit grants the second NFT to the user's wallet address on the blockchain BN when the determination unit 130 determines that the second NFT is to be granted. Thus, the NFT issuance system 10 can offer NFTs to the users who have actually visited the target area according to the user's age, incentivizing the users to visit the target area after some months or years.

Alternatively, the acquisition unit 110 of the NFT issuance system 10 acquires, from a predetermined database, visit time information (time information) indicating the visit time (time) at which the first location information was obtained. The determination unit 130 determines that an NFT can be granted to the user's wallet address if: the location indicated by the first location information is within the predetermined range; and the visit time (time) indicated by the visit time information (time information) is within a predetermined period. By setting requirements related to users' activities, the NFT issuance system 10 can encourage the users who have actually visited the target area to take some actions in the target area.

Alternatively, the acquisition unit 110 of the NFT issuance system 10 acquires, from a predetermined database, visit time information (time information) indicating the visit time (time) at which the first location information was obtained, and the determination unit 130 determines that a first NFT can be granted to the user's wallet address if: the location indicated by the first location information is within the predetermined range; and the visit time information (time information) is within a first period. The determination unit determines that a second NFT can be granted to the user's wallet address if: the location indicated by the first location information is within the predetermined range; and the visit time information (time information) is within a second period. Thus, the NFT issuance system 10 can give an incentive that some type of NFT will be granted according to the users' activity history to the users who have actually visited the target area. This can further encourage the users to engage in some actions in the target area.

The acquisition unit 110 of the NFT issuance system 10 acquires, from a user information database D121 that stores user activity information relating to users' activities, at least one of: length of stay information indicating a length of stay that is a period during which the first location information of the user is within the predetermined range; number of visits information indicating a number of visits by the user to the predetermined range up to a present time; travel route information indicating a travel route taken by the user to reach the predetermined range; and usage status information indicating a status of use by the user of a local currency issued in an area including the predetermined range up to a present time. The determination unit 130 determines that the NFT can be granted to the user's wallet address if: the location indicated by the first location information is within the predetermined range; and at least one of the length of stay, the number of visits, the travel route, and the usage status meets a predetermined requirement. By setting requirements related to users' activities, the NFT issuance system 10 can encourage the users who have actually visited the target area to take some actions in the target area.

The acquisition unit 110 of the NFT issuance system 10 acquires, from a user information database D121 that stores user activity information relating to users' activities, at least one of: length of stay information indicating a length of stay that is a period during which the first location information of the user is within the predetermined range; number of visits information indicating a number of visits by the user to the predetermined range up to a present time; travel route information indicating a travel route taken by the user to reach the predetermined range; and usage status information indicating a status of use by the user of a local currency issued in an area including the predetermined range up to a present time. The determination unit 130 determines that a first NFT can be granted to the user's wallet address if: the location indicated by the first location information is within the predetermined range; and one of the length of stay, the number of visits, the travel route, and the usage status meets a predetermined requirement. The determination unit 130 determines that a second NFT can be granted to the user's wallet address if: the location indicated by the first location information is within the predetermined range; and one of the length of stay, the number of visits, the travel route, and the usage status fails to meet the predetermined requirement. Thus, the NFT issuance system 10 can give an incentive that some type of NFT will be granted according to the users' activity history to the users who have actually visited the target area. This can further encourage the users to engage in some actions in the target area.

Alternatively, the acquisition unit 110 of the NFT issuance system 10 acquires weather information indicating a current weather condition from a database that stores information relating to weather. The determination unit 130 determines that an NFT can be granted to the user's wallet address if: the location indicated by the first location information is within the predetermined range; and the current weather condition meets a predetermined requirement. By incorporating weather information alongside the location information as the requirements for granting NFTs, the NFT issuance system 10 can improve the stability of visitor numbers in the target area regardless of the weather.

Alternatively, the acquisition unit 110 of the NFT issuance system 10 acquires weather information indicating a current weather condition from a database that stores information relating to weather, and the determination unit 130 determines that a first NFT is to be granted to the user's wallet address if: the location indicated by the first location information is within the predetermined range; and the current weather condition meets a predetermined requirement. The determination unit determines that a second NFT is to be granted to the user's wallet address if: the location indicated by the first location information is within the predetermined range; and the current weather condition fails to meet the predetermined requirement. Thus, the NFT issuance system 10 can offer an NFT according to the current weather to the users who have actually visited the target area, allowing the users to enjoy the incentive that some type of NFT will be granted. This can encourage more people to visit the target area.

The NFT issuance system 20 includes: an acquisition unit 110 configured to acquire device location information via a user terminal 200 of a user who wishes to obtain an NFT. The user terminal is configured to acquire device location information indicating the location of a predetermined device (information coordination device 100a) that the predetermined device outputs such as to be obtainable within a certain range. The system further includes: a determination unit 130 configured to determine that an NFT can be granted to the user if the location of the predetermined device indicated by the device location information is within a predetermined range; and an NFT granting unit 140 configured to grant the NFT to a wallet address of the user on a blockchain when the determination unit 130 determines that the NFT can be granted. Thus, the NFT issuance system 20 can give users the incentive that NFTs are granted to users who visit a target area, promoting visits to the target area. The system can also prevent the identification information from being fraudulently read by the information coordination device 100a that has been transferred elsewhere in an unauthorized manner. Thus, the risk of fraudulent granting of NFTs associated with the target area to users can be mitigated.

In the NFT issuance system 20, the acquisition unit 110 acquires device location information that indicates the location of the information coordination device 100a. The determination unit 130 determines that an NFT can be granted to the user if the location of the information coordination device 100a indicated by the device location information is within the predetermined range. The NFT granting unit 140 grants the NFT to the user's wallet address on the blockchain BN when the determination unit 130 determines that the NFT can be granted. This allows the NFT issuance system 20 to eliminate fraud, for example, where the identification information is read by the user terminal 200 from a remote location by unauthorized means.

The embodiment described above is given for facilitating the understanding of the present invention and not for limiting the interpretation of the present invention. Various elements in the embodiment, arrangements, materials, conditions, shapes, sizes and so on are not limited to the illustrated examples and may be changed as required. Also, various features illustrated in different forms of embodiment can be partially interchanged or combined.

### Reference Signs List

- 10, 20: NFT issuance system
- 100: NFT issuing device
- 110: Acquisition unit
- 120: Storage unit
- 130: Determination unit
- 140: NFT granting unit
- 200: User terminal

## Claims

1. An NFT issuance system comprising:
an acquisition unit configured to acquire, via an information coordination device configured to acquire first location information that indicates a location of a user terminal of a user who wishes to obtain an NFT, the first location information;
a determination unit configured to determine that the NFT can be granted to the user if the location of the user terminal indicated by the first location information is within a predetermined range; and
an NFT granting unit configured to grant the NFT to a wallet address of the user on a blockchain when the determination unit determines that the NFT can be granted.

2. The NFT issuance system according to claim 1, wherein the acquisition unit is configured to acquire second location information that indicates a location of the information coordination device, and
the determination unit is configured to determine that the NFT can be granted if the location indicated by the first location information and the location indicated by the second location information are within the predetermined range.

3. The NFT issuance system according to claim 1, wherein the determination unit is configured to determine, based on the NFT that includes range information indicating the predetermined range, that the NFT can be granted if the location indicated by the first location information is within the predetermined range indicated by the range information.

4. The NFT issuance system according to claim 1, wherein the acquisition unit is configured to further acquire a wallet address of the user, and
the NFT granting unit is configured to grant the NFT to the user's wallet address acquired by the acquisition unit when the determination unit determines that the NFT can be granted.

5. The NFT issuance system according to any one of claims 1 to 4, wherein the acquisition unit is configured to acquire attribution information that indicates an attribution of the user, and
the determination unit is configured to determine that the NFT can be granted to the user's wallet address if: the location indicated by the first location information is within the predetermined range; and the user's attribute indicated by the attribute information meets a predetermined requirement.

6. The NFT issuance system according to claim 5, wherein the acquisition unit is configured to acquire the attribute information including age information that indicates an age of the user, and
the determination unit is configured to determine that the NFT can be granted to the user's wallet address if: the location indicated by the first location information is within the predetermined range; and the user's age indicated by the age information meets a predetermined requirement.

7. The NFT issuance system according to claim 5, wherein the acquisition unit is configured to acquire the attribute information including age information that indicates an age of the user,
the determination unit is configured to determine that a first NFT can be granted to the user's wallet address if: the location indicated by the first location information is within the predetermined range; and the user's age indicated by the age information meets a first predetermined requirement,
the determination unit is configured to determine that a second NFT can be granted to the user's wallet address if: the location indicated by the first location information is within the predetermined range; and the user's age indicated by the age information meets a second predetermined requirement,
the NFT granting unit is configured to grant the first NFT to the user's wallet address on the blockchain when the determination unit determines that the first NFT can be granted, and
the NFT granting unit is configured to grant the second NFT to the user's wallet address on the blockchain when the determination unit determines that the second NFT can be granted.

8. The NFT issuance system according to any one of claims 1 to 4, wherein the acquisition unit is configured to acquire, from a predetermined database, time information that indicates a time when the first location information was obtained, and
the determination unit is configured to determine that the NFT can be granted to the user's wallet address if: the location indicated by the first location information is within the predetermined range; and the time indicated by the time information is within a predetermined period.

9. The NFT issuance system according to any one of claims 1 to 4, wherein the acquisition unit is configured to acquire, from a predetermined database, time information that indicates a time when the first location information was obtained,
the determination unit is configured to determine that a first NFT can be granted to the user's wallet address if: the location indicated by the first location information is within the predetermined range; and the time indicated by the time information is within a first period, and
the determination unit is configured to determine that a second NFT can be granted to the user's wallet address if: the location indicated by the first location information is within the predetermined range; and the time indicated by the time information is within a second period.

10. The NFT issuance system according to any one of claims 1 to 4, wherein the acquisition unit is configured to acquire, from a database that stores user activity information relating to users' activities, at least one of: length of stay information indicating a length of stay that is a period during which the first location information of the user is within the predetermined range; number of visits information indicating a number of visits by the user to the predetermined range up to a present time; travel route information indicating a travel route taken by the user to reach the predetermined range; and usage status information indicating a status of use by the user of a local currency issued in an area including the predetermined range up to a present time, and
the determination unit is configured to determine that the NFT can be granted to the user's wallet address if: the location indicated by the first location information is within the predetermined range; and at least one of the length of stay, the number of visits, the travel route, and the usage status meets a predetermined requirement.

11. The NFT issuance system according to any one of claims 1 to 4, wherein the acquisition unit is configured to acquire, from a database that stores user activity information relating to users' activities, at least one of: length of stay information indicating a length of stay that is a period during which the first location information of the user is within the predetermined range; number of visits information indicating a number of visits by the user to the predetermined range up to a present time; travel route information indicating a travel route taken by the user to reach the predetermined range; and usage status information indicating a status of use by the user of a local currency issued in an area including the predetermined range up to a present time,
the determination unit is configured to determine that a first NFT can be granted to the user's wallet address if: the location indicated by the first location information is within the predetermined range; and one of the length of stay, the number of visits, the travel route, and the usage status meets a first predetermined requirement, and
the determination unit is configured to determine that a second NFT can be granted to the user's wallet address if: the location indicated by the first location information is within the predetermined range; and one of the length of stay, the number of visits, the travel route, and the usage status meets a second predetermined requirement.

12. The NFT issuance system according to any one of claims 1 to 4, wherein the acquisition unit is configured to acquire weather information indicating a current weather condition from a database that stores information relating to weather, and
the determination unit is configured to determine that the NFT can be granted to the user's wallet address if: the location indicated by the first location information is within the predetermined range; and the current weather condition meets a predetermined requirement.

13. The NFT issuance system according to any one of claims 1 to 4, wherein the acquisition unit is configured to acquire weather information indicating a current weather condition from a database that stores information relating to weather,
the determination unit is configured to determine that a first NFT is to be granted to the user's wallet address if: the location indicated by the first location information is within the predetermined range; and the current weather condition meets a first predetermined requirement, and
the determination is configured to determine that a second NFT is to be granted to the user's wallet address if: the location indicated by the first location information is within the predetermined range; and the current weather condition meets a second predetermined requirement.

14. An NFT granting system comprising:
an acquisition unit configured to acquire device location information via a user terminal of a user who wishes to obtain an NFT, the user terminal being configured to acquire the device location information indicating a location of a predetermined device that the predetermined device outputs such as to be obtainable within a certain range;
a determination unit configured to determine that the NFT can be granted to the user if the location of the predetermined device indicated by the device location information is within a predetermined range; and
an NFT granting unit configured to grant the NFT to a wallet address of the user on a blockchain when the determination unit determines that the NFT can be granted.

15. The NFT granting system according to claim 14, wherein the acquisition unit is configured to acquire the device location information and user location information indicating a location of the user via the user terminal, and
the determination unit is configured to determine that the NFT can be granted to the user if the location of the predetermined device indicated by the device location information and the location of the user terminal indicated by the user location information are within the predetermined range.

16. An NFT issuance method, which comprises the steps of:
acquiring, by a computer, via an information coordination device configured to acquire first location information indicating a location of a user terminal of a user who wishes to obtain an NFT, the first location information;
determining that the NFT can be granted to the user if the location of the user terminal indicated by the first location information is within a predetermined range; and
granting the NFT to a wallet address of the user on a blockchain when the determination unit determines that the NFT can be granted.

17. A program that causes a computer to execute a process including:
acquiring, via an information coordination device configured to acquire first location information indicating a location of a user terminal of a user who wishes to obtain an NFT, the first location information;
determining that the NFT can be granted to the user if the location of the user terminal indicated by the first location information is within a predetermined range; and
granting the NFT to a wallet address of the user on a blockchain when the determination unit determines that the NFT can be granted.
